# EUROPEAN PATENT APPLICATION

(11) **EP 4 485 331 A1**
(43) Date of publication of application: **01.01.2025**
(21) Application number: 24183936.4
(22) Date of filing: 24.06.2024
(51) Int. Cl.: G06Q 30/0601, G06Q 20/24, G06Q 40/03

(54) **SYSTEM, METHOD AND APPARATUS FOR PERSONALIZATION OF PREQUALIFICATION FOR FINANCING PROGRAMS**

(30) Priority: 26.06.2023 US 202318214171
(71) Applicant: Affirm, Inc., San Francisco, CA 94108 (US)
(72) Inventor: DONG, Jennifer, San Francisco, 94108 (US); PALACIOS, Zachary, San Francisco, 94108 (US); KNOTT, Emily, San Francisco, 94108 (US); SUN, Olivia, San Francisco, 94108 (US); SABNE, Shweta Shreepad, San Francisco, 94108 (US)
(74) Representative: Piotrowicz, Pawel Jan Andrzej

(57) **Abstract**

A method for providing personalized prequalification of a customer may include receiving identification information of the user associated with user activity on a website of a merchant or lender, conducting a financing program prequalification determination for the user based on the identification information and a set of prequalification criteria without any request from the user for financing, receiving an indication that the user is not prequalified based on the financing program prequalification determination, providing instructions for generation of a prequalification engagement notification at a display of a user device associated with the user responsive to the indication, and, responsive to selection of the prequalification engagement notification, providing one or more guidance instructions for generation at the display of the user device for the user to provide prequalification requirement data for a subsequent performance of the financing program prequalification determination.

## Description

### TECHNICAL FIELD

Example embodiments generally relate to financial industry technologies and, in particular, relate to apparatuses, systems, and methods for personalizing prequalification for financing program offers to customers.

### BACKGROUND

The financial industry is comprised of many thousands of customers, merchants, lenders, borrowers, and other role players that all interact in various ways to enable customers to ultimately have access to goods and services provided by merchants. Credit and debit transactions have long been a way that individuals have managed point of sale transactions to ensure seamless transfer of funds from customers, or on their behalf, to merchants for relatively routine or small transactions. Meanwhile, obtaining a loan from a bank has long been the most common way of obtaining financing for non-routine or larger transactions. More recently, buy now, pay later financing has become a popular option.

In many of the cases above, a customer may apply for credit via an online system that intakes certain information, and then makes determinations regarding whether (and in some cases how) to extend credit to the customer. The application process is typically automated in some form in terms of gathering required information, making any needed checks or confirmations (e.g., regarding identity verification, account verification, creditworthiness, etc.), making a decision on the application, and distribution of funds or advancing a line of credit. The automation of the process necessarily involves the employment of algorithms and policies that can often be executed via software programming.

More recently, certain companies that offer financing programs have undertaken to make a prequalification determination for certain customers and, if a customer is prequalified for a given loan amount, proactively informing the approved customers of their prequalification. This mode of engagement can increase loan volumes without very much increased risk, if any. However, if there is some reason why a particular customer is not prequalified, there is no follow-up thereafter and the opportunity for engagement is generally allowed to simply pass.

### BRIEF SUMMARY OF SOME EXAMPLES

Accordingly, some example embodiments may enable the provision of technical means by which to provide an ability to continue the engagement with the customer in a personalized way that may enable the customer to ultimately be prequalified.

In an example embodiment, a method for providing personalized prequalification of a customer may be provided. The method may include receiving identification information of the user associated with user activity on a website of a merchant or lender, conducting a financing program prequalification determination for the user based on the identification information and a set of prequalification criteria without any request from the user for financing, receiving an indication that the user is not prequalified based on the financing program prequalification determination, providing instructions for generation of a prequalification engagement notification at a display of a user device associated with the user responsive to the indication, and, responsive to selection of the prequalification engagement notification, providing one or more guidance instructions for generation at the display of the user device for the user to provide prequalification requirement data for a subsequent performance of the financing program prequalification determination.

In another example embodiment, an apparatus for providing personalized prequalification of a customer is provided. The apparatus may include processing circuitry. The processing circuitry may be configured for receiving identification information of the user associated with user activity on a website of a merchant or lender, conducting a financing program prequalification determination for the user based on the identification information and a set of prequalification criteria without any request from the user for financing, receiving an indication that the user is not prequalified based on the financing program prequalification determination, providing instructions for generation of a prequalification engagement notification at a display of a user device associated with the user responsive to the indication, and, responsive to selection of the prequalification engagement notification, providing one or more guidance instructions for generation at the display of the user device for the user to provide prequalification requirement data for a subsequent performance of the financing program prequalification determination.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing financing programs to customers in relation to prequalification according to an example embodiment;
FIG. 2 illustrates a functional block diagram of a financing platform according to an example embodiment;
FIG. 3 is a block diagram illustrating overall operation of the financing platform with respect to providing personalized prequalification of a customer in accordance with an example embodiment;
FIG. 4 illustrates an example of a display screen generated pursuant to a positive financing program qualification determinations in accordance with an example embodiment;
FIG. 5 illustrates an example of a display screen generated pursuant to a negative financing program qualification determinations in accordance with an example embodiment;
FIG. 6 shows a missing information screen for obtaining missing information from a customer responsive to customer selection of an engagement notification in accordance with an example embodiment;
FIG. 7 shows a status modification screen for changing an account status of a customer responsive to customer selection of the engagement notification in accordance with an example embodiment; and
FIG. 8 illustrates a block diagram of a method for providing personalized prequalification of a customer in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a financing platform that has the ability to conduct prequalification assessments for customers as described above. This may include conventional engagement with such customers where a prequalification determination is conducted and a positive result is achieved (i.e., the customer is prequalified for a selected credit limit, loan amount or financing option). However, as noted above, when a customer is not prequalified, the engagement with that customer generally excludes any mention of prequalification, and any opportunity to engage with such customer on an automated basis is generally forgone. The customer will not only not be prequalified, but will not know why he/she was not prequalified either. Example embodiments may further provide technical tools to engage with customers that are not prequalified for some reason to inform such customers of specific reasons (i.e., reasons personalized for and specific to the customer) why they were not prequalified. Moreover, in some cases, example embodiments may provide technical tools to interactively guide such customers through a process to get prequalified, or at least to understand what avenues may be available to allow such customers to get prequalified.

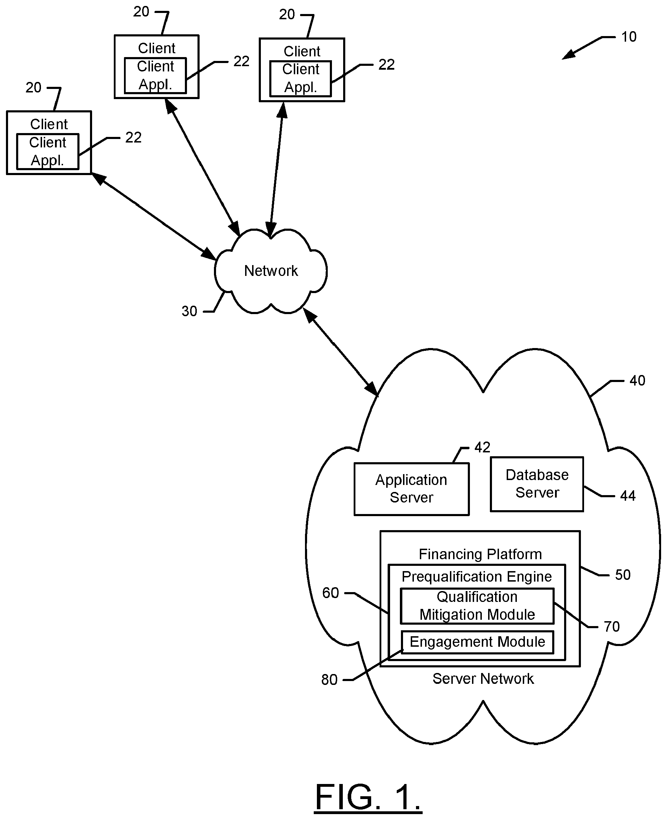

An example embodiment of the invention will now be described in reference to FIG. 1, which illustrates an example system in which an embodiment of the present invention may be employed. As shown in FIG. 1, a personalized prequalification management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement, employ or interact with example embodiments. Thus, in some embodiments, one or more of the clients 20 may be associated with an individual person (e.g., a customer), entity, family unit or organization (e.g., having different business units, branch offices, or other locations). In general, the clients 20 may be terminals or platform entities that are capable of interacting with example embodiments, and there could be as few as one, or a host of such terminals or entities. Moreover, in some cases, distributed computations, calculations, decisions, etc., may be made at respective ones of the clients 20.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or data/information for consumption/processing at the clients 20). As such, for example, the client application 22 may include corresponding executable instructions for configuring the client 20 to provide corresponding functionalities for modeling, sharing, processing and/or utilizing financial data and interacting with an underwriter as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols. In some cases, the other devices to which the clients 20 may be operably coupled via the network 30 may include merchant communication devices (e.g., computer, a personal digital assistant (PDA), cellular phone, smart phone, tablet, or the like belonging to a merchant who may be interested in selling goods to the customer associated with one or more of the clients 20. The merchant communication devices may have similar hardware to the clients 20 in some cases, and one of the clients 20 could represent an instance of the merchant communication devices belonging to an individual merchant.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices and, in some cases, could be embodied on a single computer. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to financing platform 50, and more particularly relating to facilitating financial computations and calculations related to modeling of cash flow and repayment of loans for each of multiple different financing program options where, for example, the loans may include a buy now, pay later loan (i.e., an installment loan), or other products associated with credit or lending transactions. For example, the application server 42 may be configured to provide (via the financing platform 50) execution of instructions, and storage of information descriptive of events or activities, associated with the financing platform 50 and the execution of financial computations, calculations and modeling on behalf of a user of the system 10 located at one of the clients 20 in real time. In some cases, the financial computations, calculations and modeling may be associated with financing programs that ultimately are offered to customers in association with executing a financial transaction that may include obtaining financing (such as an installment loan), and the activities associated therewith. Thus, example embodiments support the provision of a set of options for different instances of a loan/product that can be offered to a customer to cause the customer to submit a loan application detailing information required by the lender or underwriter (and operator of the financing platform 50) to determine whether credit, funds, promotions, or other products can be provided to the customer based on information provided in the loan/product application. However, example embodiments may also apply to other types of loans.

In some embodiments, the financing platform 50 may be a technical device, component or module affiliated with the underwriter/lender or an agent of the lender. Thus, the financing platform 50 may operate under control of the lender or agent of the lender to be a technical means by which to carry out activities under direction of the lender/agent or employees thereof. As such, in some embodiments, the clients 20 may access the financing platform 50 services, and more particularly contact the financing platform 50 online and utilize the services provided thereby. However, it should be appreciated that in other embodiments, an application (e.g., the client application 22) enabling the clients 20 to interact with the financing platform 50 (or components thereof) may be provided from the application server 42 (e.g., via download over the network 30) to one or more of the clients 20 to enable recipient clients 20 to instantiate an instance of the client application 22 for local operation such that the financing platform 50 may be a distributor of software enabling individual users to utilize the financing platform 50. Alternatively, another distributor of the software may provide the client 20 with the client application 22, and the financing platform 50 may communicate with the client 20 (via the client application 22) after such download.

In an example embodiment, the client application 22 may therefore include application programming interfaces (APIs) and other web interfaces to enable the client 20 to conduct operations as described herein via the financing platform 50. The client application 22 may include a series of control consoles or web pages including a landing page, onboarding services, activity feed, account settings (e.g., user or customer profile information), transaction management services, payment management services and the like in cooperation with a service application that may be executed at the financing platform 50. Thus, for example, the client application 22 may enable the user or operator to articulate and submit queries, run modeling algorithms, execute budgeting functions, and/or the like using the financing platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the financing platform 50 configured to operate in accordance with an example embodiment of the present invention. In this regard, for example, the financing platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the financing platform 50. Thus, it should be appreciated that the functions of the financing platform 50 can be conducted via client-server based interactions involving communications between clients 20 and the server network 40, or may be conducted locally at one of the clients 20 after an instance of the financing platform 50 is downloaded (e.g., via or as the client application 22) locally at the corresponding one of the clients 20.

As such, the environment of FIG. 1 illustrates an example in which provision of data, content and information associated with the financial industry may be accomplished by a particular entity (namely the financing platform 50 residing at the application server 42 or at one of the clients 20). Thus, the financing platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the financing platform 50 may operate to enable the user associated with a given one of the clients 20 to receive financing program options (e.g., a set of financing programs) that have been selected intelligently to be optimal for the given one of the clients 20. In other words, the financing platform 50 may generate the set of financing programs that are to be sent to the given one of the clients 20 after performing an optimization algorithm that is configured to select the set of financing programs which, after selection, become a set of financing programs for the given one of the clients 20. In some example embodiments, the client application 22 may be used in connection with running queries, models, experiments or calculations that are then used as the basis for determining the set of financing programs in relation to a request for, or recommendation of, financing programs the underwriter is willing to offer to the organization associated with the given one of the clients 20 under control of the financing platform 50. In this regard, for example, the client application 22 may be used to engage (e.g., via a website and corresponding APIs) with the financing platform 50 to request or select individual financing programs (e.g., financial products, loans, or types of loans) to offer to customers for completing transactions with the given one of the clients 20. The transactions themselves may also be conducted using services associated with the financing platform 50, but doing so is not necessary. The financing platform 50 may prompt the client 20 to provide information about the products or industry to which the financing programs will likely be applied by customers, and may request information about the given one of the clients 20, the customers, or other information associated with the financial transactions that are to be financed. In other words, the client 20 may provide a user interface function for interacting with the financing platform 50 to identify the information that will be evaluated using the financing platform 50 to generate the set of optimized financing programs.

Regardless of how the queries, calculations or modeling activities are initiated, the financing platform 50 of FIG. 1 may be used to manage execution of such activities. Each of these activities may have its own respective timing and calculations and communications that are facilitated by the financing platform 50 and various components of the financing platform 50 may be conducted in parallel. The components, which may be functional modules that operate via API or function calls to respective segmented platforms or a monolith or other collection of rules, policies, instructions, or the like. In an example embodiment, the financing platform 50 may include, host or otherwise be operably coupled to various models and/or engines for performing specific functions associated with the overall function of determining whether a customer qualifies for financing via any of a possible set of financing programs that may be offered to the customer (or customers in general). In some cases, qualification decisions may be associated with determining a credit limit that can be extended to the customer, based on information known about the customer either through active or passive engagement with the customer. Moreover, in some cases the qualification decisions may be made responsive to requests for credit or financing from the customer. These requests may trigger the operation of the models or engines described above to determine whether to approve the customer for a loan or credit limit. However, in at least some cases, the models or engines may include the capability of performing credit extension or financing decisions without any specific request from the customer. These unsolicited determinations may result in the notification of the customer that, for example, the customer is eligible (e.g., "prequalified") to receive financing of up to a predetermined amount. In an example embodiment, the determination regarding qualification for financing may itself employ conventional models or engines that are programmed to make determinations based on risk assessments or valuation assessments that are well known in the industry.

When such determinations are made, the customer may be informed if qualified (or prequalified) for a financing offer or extension of credit. However, in a typical case where prequalification is involved, no such information can be provided to customers who are not prequalified. Thus, the engagement with those customers is typically ended at that point, and it is the same result whether the customer failed to be prequalified because a negative decision was reached based on a full evaluation of all relevant information to making the determination, or even if the customer failed to be prequalified simply because certain information needed to make the determination was lacking. Particularly in the case where some information is lacking, the customer may be able to simply provide the missing information, and then become prequalified. However, even if not qualified based on all available information, further engagement with the customer could enable the customer to remedy some reasons for failure to be prequalified, and could become prequalified. Example embodiments aim to provide technical means to intelligently decide whether to engage those customers, and provide the tools for such engagement.

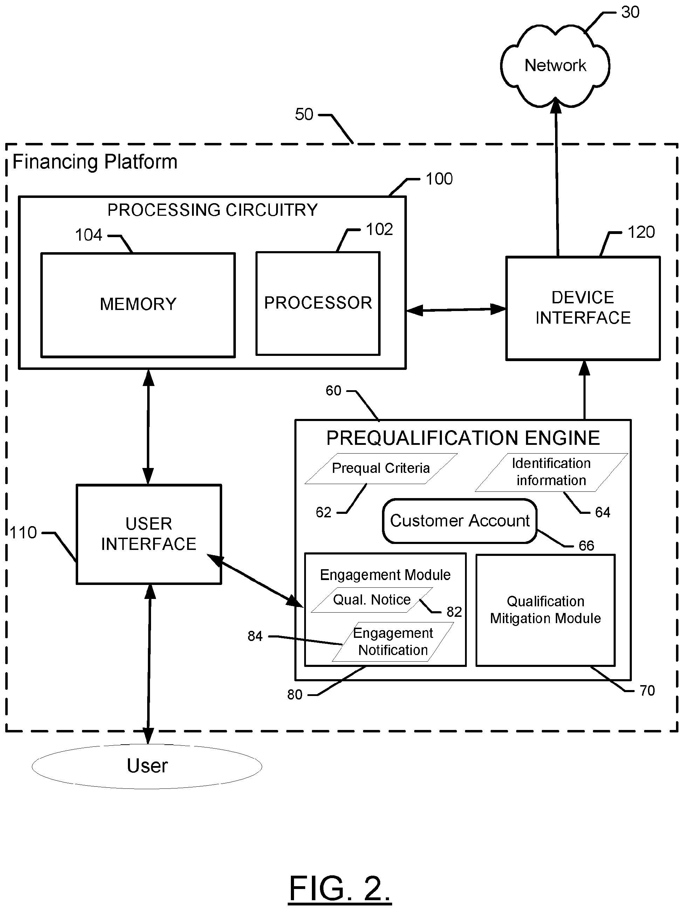

Thus, for example, the financing platform 50 may include a prequalification engine 60 according to an example embodiment. The prequalification engine 60 may further include (or be operably coupled to) a qualification mitigation module 70 and an engagement module 80. The operation and function of each of these modules will be described in greater detail below. In this regard, some of the specific components or structures associated with the financing platform 50 of an example embodiment will be described in reference to FIG. 2 below.

In an example embodiment, one or more of the set of financing programs that may otherwise be considered for presentation to a customer (e.g., either in association with a prequalification process or for credit or financing offers requested by customers) may be evaluated relative to the models and qualification algorithms that are outside the scope of this disclosure. The initial decision regarding whether a customer is qualified (or prequalified) for financing may therefore operate according to any suitable manner. However, with respect to those financing programs that are associated with an automatically (i.e., without user or customer initiation) generated notice of prequalification of the user or customer for a respective one or more of the financing programs, example embodiments add tools for engagement with customers in certain situations that do not result in prequalification as described herein. Thus, for example, without any solicitation, request or intent of the user or customer to obtain financing, a prequalification decision may be made for the customer via the prequalification engine 60 in accordance with an example embodiment. If prequalified, the customer may be informed of such prequalification (e.g., via the engagement module 80). However, if not prequalified (at least initially), the qualification mitigation module 70 may determine whether and how to engage with the customer to potentially cure any reasons why the customer was not prequalified. If a determination is made to engage the customer to attempt to mitigate or cure the reasons why the customer was not prequalified, then the engagement module 80 may further provide tools for the customer to address, cure or mitigate those reasons to potentially allow a subsequent prequalification decision to achieve a different result (i.e., to prequalify the customer for a given credit limit or loan amount).

FIG. 2 shows certain elements of an apparatus for provision of the financing platform 50 or other processing circuitry according to an example embodiment. The apparatus of FIG. 2 may be employed, for example, as the financing platform 50 itself operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42) or by devices in a client/server relationship (e.g., the application server 42 and one or more clients 20). Thus, although FIG. 2 illustrates the financing platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating provision of a personalized prequalification of customers for financing programs (e.g., at one of the clients 20) is shown. In this regard, the financing platform 50 may be configured to perform analysis, modeling, experimentation or other determinations based on the signaling and/or the information provided to determine whether a customer can be prequalified (e.g., pre-approved) for one or more of a set of financing programs that a lender or merchant may be willing to offer to the customer. The apparatus may be an embodiment of the financing platform 50 and/or modules thereof or a device of the application server 42 hosting the financing platform 50 and/or modules thereof. As such, configuration of the apparatus as described herein may transform the apparatus into the financing platform 50 and modules thereof. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU), or any other processing device. In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located (e.g., at one of the clients 20, or at another device).

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the financing platform 50 and/or modules thereof, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the financing platform 50 or modules thereof as described below.

The prequalification engine 60 may be configured to employ models, algorithms and/or the like for determining whether a customer is prequalified based on the information provided thereto. The information provided may include prequalification criteria 62 of various kinds, and identification information 64 for the customer (or user). In an example embodiment, it may be assumed that the customer is browsing or otherwise engaging in online activity either directly or indirectly with a lender or operator of the financing platform 50. In the direct case, for example, the customer may have logged into an account with the lender (or facilitator of a loan) at a website of or affiliated with the lender or facilitator. The reason for the login may be, for example, to apply for a loan, make a loan payment, check account status, utilize other resources or functions facilitated by the lender or facilitator, and/or the like. The indirect case, for example, may involve shopping online at a merchant website, where the merchant has an association or affiliation with the lender or facilitator, and the with which merchant (and website) the customer has an account to which the customer has logged in. In either case, by logging into the account (with the lender or merchant), the customer provides the identification information 64 as a normal part of the login process.

Having the identification information 64 allows the prequalification engine 60 to reliably identify the customer on an individual basis. In some cases, the prequalification engine 60 may be able to make an association between the customer (identified by the identification information 64) and a corresponding account (e.g., customer account 66) with the facilitator or lender, even if the identification information 64 was provided in the context of a login to a merchant account. The account with the facilitator or lender may then be accessed (e.g., by the prequalification engine 60) or otherwise referenced relative to making a financing program prequalification determination for the customer based on the identification information 64 and a set of prequalification criteria 62 without any request from the customer for financing. In other words, the prequalification determination may be made automatically and without any prompting by the customer. However, in some embodiments, contacting or otherwise interacting with the customer may only be accomplished if, for example, the customer account 66 has a prior record of permission from the customer for making credit checks, or at least a prior loan application or credit application that infers permission of the customer to conduct credit checks and/or make financing offers to the customer. Such permission is not required though, and notifications may be sent to customers without permission in some cases.

The prequalification criteria 62 may be criteria that are considered by the models or algorithms that determine risk levels associated with lending to the customer, or valuation determinations associated with lending to the customer that otherwise are employed to make decisions about prequalifying the customer. The prequalification criteria 62 may include, for example, a credit score, income information, loan history, outstanding debt, loan repayment behavior, and/or other factors. If all of the necessary prequalification criteria 62 are available for evaluation, the prequalification engine 60 may make the financing program prequalification determination.

If the financing program prequalification determination is positive and the customer is approved for one or more loan products, or for a credit limit that defines a loan or credit amount for which the facilitator is committed to offer and finance the customer, then the customer may receive a qualification notification 82 indicating that the customer is prequalified. However, it is notable that no commitment may be provided in some situations and, in those situations, a final confirmatory credit check may be performed based on updated information before any commitment to an offer. In some cases, the qualification notification may include a credit limit value, or even some loan terms (e.g., zero percent financing, payment amounts, etc.) However, when certain cart size thresholds are met, or not met, it may not be possible to determine loan terms at the time of prequalification. The qualification notification 82 may, in some cases, be handled via the engagement module 80. However, if the financing program prequalification determination is negative and the customer is not approved, no engagement with the customer is normally carried on relative to any possibility of extending credit or a loan thereafter. Example embodiments employ the qualification mitigation module 70 and the engagement module 80 to change this paradigm.

In this regard, the qualification mitigation module 70 may be configured to determine reasons for the financing program prequalification determination being negative and the customer not being approved for prequalification. Moreover, in some cases, the qualification mitigation module 70 may further be configured to determine whether the reasons are curable by engagement with the customer. For example, if a simple lack of information caused the negative financing program prequalification determination, the qualification mitigation module 70 may identify specific information that is missing, so that the customer may be informed of the potential to become prequalified by providing the missing information. In other cases, and perhaps more complicated situations, the qualification mitigation module 70 may further determine that although no information is missing, a status of one (or more) criterion among the prequalification criteria 62, which is correctable, is the cause for the negative financing program prequalification determination. In those cases, the customer may be engaged to take action to correct the status of the one (or more) criterion among the prequalification criteria 62, which is correctable. The engagement module 80 may then be configured to generate specific means, interface screens, control consoles, data input mechanisms, etc., that can be used by the customer to provide the missing information or make changes to correctable information or status. In an example embodiment, the engagement module 80 may do this by generating an engagement notification 84 to cause a display at the device of the customer (e.g., client 20) of the specific means, interface screens, control consoles, data input mechanisms, etc., that are tailored to obtaining the information from the customer, or enabling the customer to take actions that correct status of certain criterion. Various function calls, APIs, or the like may be employed by the engagement module 80 to cause the display activities required to achieve these results.

In an example embodiment, the qualification mitigation module 70 may access the customer account 66 based on the identification information 64 (again without any instruction from the customer, but instead in response only to user activity on a website of a merchant or lender). When the qualification mitigation module 70 receives an indication of a result of conducting a financing program prequalification determination for the customer, the qualification notification may be sent (e.g., by the engagement module 80) if the result is positive, and if the result is negative, the qualification mitigation module 70 may examine all of the prequalification criteria 62 associated with the customer account 66 to attempt to determine a reason for the negative result (or failure). In some example embodiments, the qualification mitigation module 70 may apply the information associated with the customer account 66 to a structured information matrix that has specific fields for each individual criterion amongst the prequalification criteria 62. When applied, the structured information matrix may identify fields that have missing information, and the corresponding criterion associated with each empty field may be considered missing information so that the qualification mitigation module 70 can inform the engagement module 80 of the missing information.

In an example embodiment, the structured information matrix may also employ knowledge of the models and/or algorithms employed to make prequalification determinations, to determine, even if all information needed to make the prequalification determination is present, which specific individual criterion (or combinations of criteria) are a likely cause of generating a negative result. The individual criterion (or combinations of criteria) may be evaluated to see whether they are correctable, or simply considered correctable. In this regard, various scoring algorithms and threshold scores may be employed on the information evaluated to determine what is correctable. Thus, as can be appreciated, the computations and calculations of the qualification mitigation module 70 may be extremely complex and computationally expensive (i.e., generating a high computational load). Accordingly, in some cases, the structured information matrix may be made or maintained by employing a machine learning module. In this regard, the complexity of identifying the missing information or reasons for negative results may be too great for a simple programmed computer to undertake. In such cases, or when the scale of combined computation and calculation associated with processing situations associated with multiple different customers simultaneously are involved, only a machine learning module trained to perform the computations and calculations may be capable of handling the corresponding tasks.

After the qualification mitigation module 70 identified either missing information or correctable information, the engagement module 80 may interact with the customer to make the customer aware of the situation via the engagement notification 84. The engagement notification 84 may, in some cases, be merely informative to the customer, and may indicate that the customer may, by selecting the engagement notification 84 (or some display element associated therewith) take active steps to become prequalified. Thus, for example, the engagement notification 84 may invite the customer to engage with the prequalification engine 60 to provide missing information to the prequalification engine 60, or to change status information to increase the likelihood that a subsequent financing program prequalification determination will generate a positive result. The engagement notification 84 may, in some cases, only be issued when prequalification is initiated by the customer, or some engagement indicating interest by the customer has occurred (e.g., for user-initiated prequalification). However, it is also possible that the engagement notification 84 could be issued prior to any specific interest from the customer (e.g., proactive prequalification). Acceptance of the invitation may be signified by clicking the engagement notification 84, or some other link, button or other interface element associated therewith.

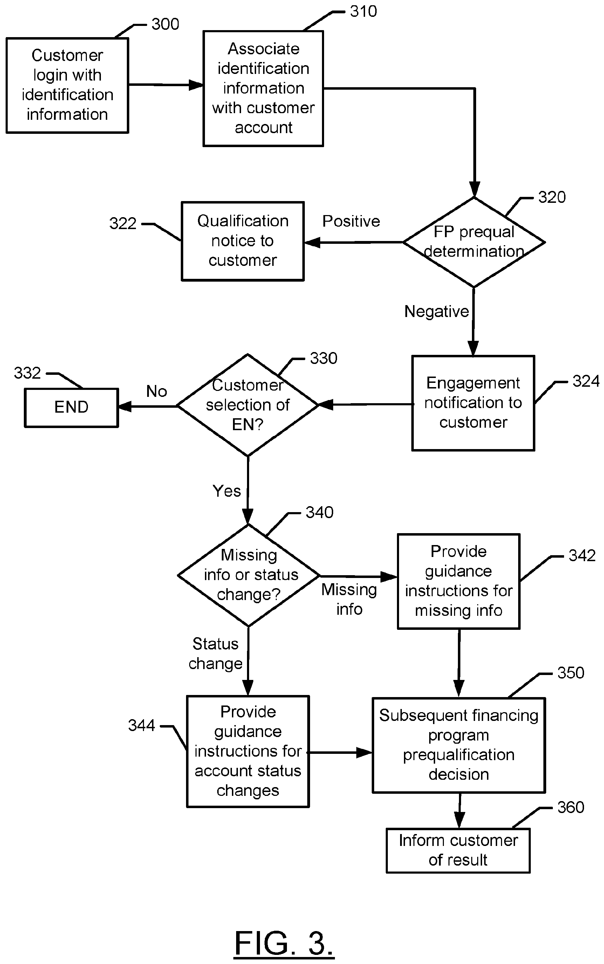

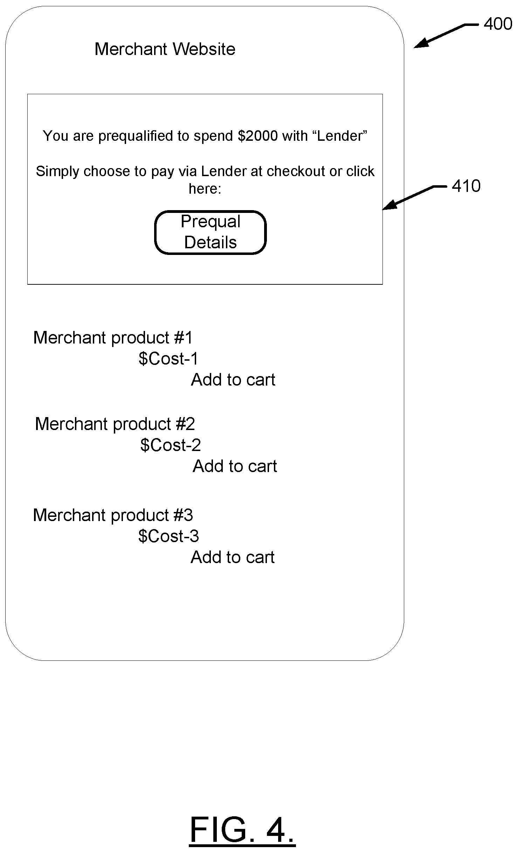

In an example embodiment, when the customer selects the engagement notification 84 (or an interface element associated therewith), the engagement module 80 may generate instructions for display (e.g., at the client 20) of guidance instructions that are specific to the enabling of the customer to either provide missing information or make status changes. FIG. 3 illustrates a block diagram of control flow associated with an example embodiment through the provision of guidance instructions, and FIGS. 4-7 illustrate examples of displays generated (e.g., at the client 20) based on operation of the engagement module 80 in accordance with an example embodiment.

Turning first to FIG. 3, the customer initially logs in to an account associated with a merchant or lender/facilitator website and provides identification information at operation 300. The identification information is used to associate the customer with a corresponding customer account at operation 310. The customer account may include information that, along with perhaps the identification information, can be used to evaluate whether the customer prequalifies for financing program offers or a credit limit extension. Such information may be considered or otherwise include prequalification criteria. Thus, at operation 320, a financing program prequalification determination may be made based on the identification information and/or the prequalification criteria. If the result is positive, at operation 322, a qualification notice may be sent to the customer (e.g., via client 20). If the result is negative, at operation 324, an engagement notification may be made to the customer (e.g., via client 20). A determination may be made as to whether the customer selects the engagement notification at operation 330. If the customer does not select or otherwise interact with the engagement notification, then processing may end at operation 330. However, if the customer selects or otherwise interacts with the engagement notification, then a determination may be made as to whether there is missing information or account status that must be changed to permit a possible positive result for a subsequent financing program prequalification determination at operation 340. Provision of missing information may be solicited by guidance instructions at operation 342, or provision of interfaces to change account status may be provided at operation 344. Thereafter, a subsequent financing program prequalification determination may be made at operation 350. Positive or negative results may, in some cases, then be communicated to the customer at operation 360.

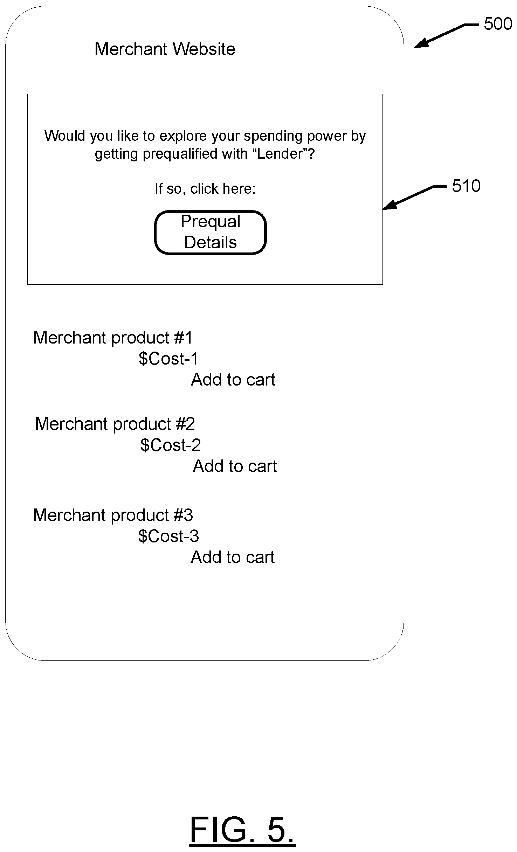

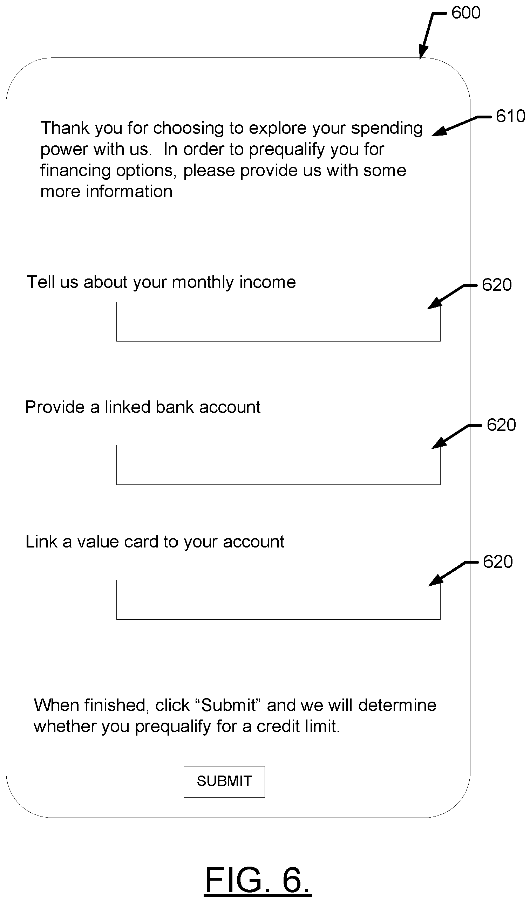

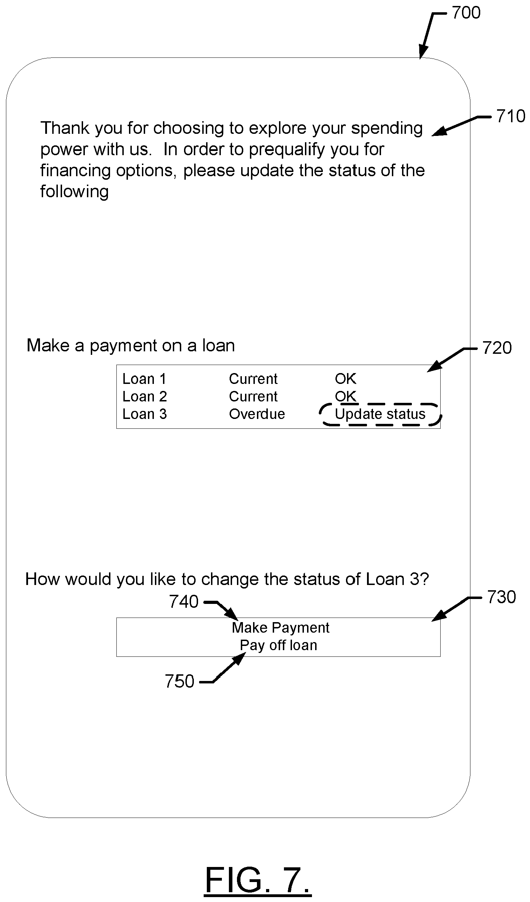

FIGS. 4 and 5 illustrate each an example of display screens that may be generated pursuant to positive or negative financing program qualification determinations, respectively. In this regard, display screen 400 of FIG. 4 illustrates a positive qualification notification 410 for a positive financing program qualification determinations. Meanwhile, and display screen 500 illustrates a sample screen that may be presented after a negative financing program qualification determination, with the provision of an engagement notification 510 provided thereon. The engagement notification 510 may, in this example, be selectable in order to receive guidance instructions as shown in FIGS. 6 and 7. However, in some embodiments, the engagement notification itself may actually include guidance instructions. Thus, for example, the engagement notification 510 of FIG. 5 may include an indication of missing information or another reason why prequalification currently cannot be completed.

Turning now to FIGS. 6 and 7, FIG. 6 shows a missing information screen 600 that may be used to obtain missing information from the customer responsive to customer selection of the engagement notification 510 of FIG. 5. The missing information screen 600 includes one or more explanation fields 610 including text explaining the purpose of the missing information screen 600 and/or instructions for interaction therewith. The missing information screen 600 also includes one or more data entry fields 620 in which the missing information is actually provided. The missing information provided in the data entry fields 620 may include the example contents shown, but also additional or other contents as well. In some cases, annual income verification, address verification, email verification, physical ID verification, and/or other informational inquiries may be provided to obtain missing information.

FIG. 7 shows a status modification screen 700, which includes links, tools or interfaces to enable the user to make status changes that may impact the subsequent financing program qualification determination. In the example shown, the status modification screen 700 includes an explanation field 710 including text explaining the purpose of the status modification screen 700 and/or instructions for interaction therewith. A first guidance instruction 720 is provided to show existing loans associated with the customer account, and a status of each. In the depicted example, one loan (i.e., Loan 3) is overdue. The customer has therefore selected "update status" as a response and a further interface element with a second guidance instruction 730 was then generated to enable direct interaction with the status of loan 3. The options shown include a make loan payment option 740, and a payoff loan option 750. Either or both of these may be applicable, as may be other status changes that could additionally or alternatively be presented on the status modification screen 700. Moreover, in some cases, a combination of status modification and missing information provision may be handled via respective individual instances of a separate screen with corresponding data entry or status change links or functions associated therewith, or links to the accounts themselves or website of the lender/facilitator with login information already provided to directly enable the customer to make a payment or payoff the loan accordingly. Thus, for example, selection of the options or links on the status modification screen 700 may generate a new screen with payment options provided thereon with specific information about the respective loans (e.g., next payment date, payment method, options for early payment, options for full payment, etc.).

After account status changes are made or missing information is provided, as noted above, a subsequent financing program prequalification determination may be made. In some cases, if a positive result is now achieved, a prequalified amount (e.g., a credit limit) may be communicated to the customer. The prequalified amount could be applicable only to the merchant (e.g., the merchant on whose merchant website the original activity occurred), or may be a universally applicable prequalified amount. If universal, the universality may apply to different payment methods (e.g., value card, online purchase, etc.), different merchants, and may also include any applicable merchant boost or incentive values. However, merchant specific prequalification may exist side-by-side with otherwise universal prequalification in some cases. For example, a list of merchants who elect to be included for merchant specific prequalification may exist, and any prequalification amounts presented when the customer visits the merchant's website would be specific to that merchant. However, if the customer visits a website of another merchant that is not among those with merchant specific prequalification program (or the website of the facilitator/lender), then a universal prequalification amount may be generated. Example embodiments may therefore provide technical means through specific interfaces with the customer to provide new functionality that was not previously possible. In particular, customers who are not prequalified for loans may be offered engagement (automatically or without their solicitation) to become prequalified with their further solicitation and provision of information. Thus, whereas prior failure to prequalify a customer for any reason effectively ended any further possibility of engagement, example embodiments invite engagement through non-intrusive but technical tools that allow the customer to maintain control of their financial situation, but also use tools to improve it and further enhance their ability to access credit.

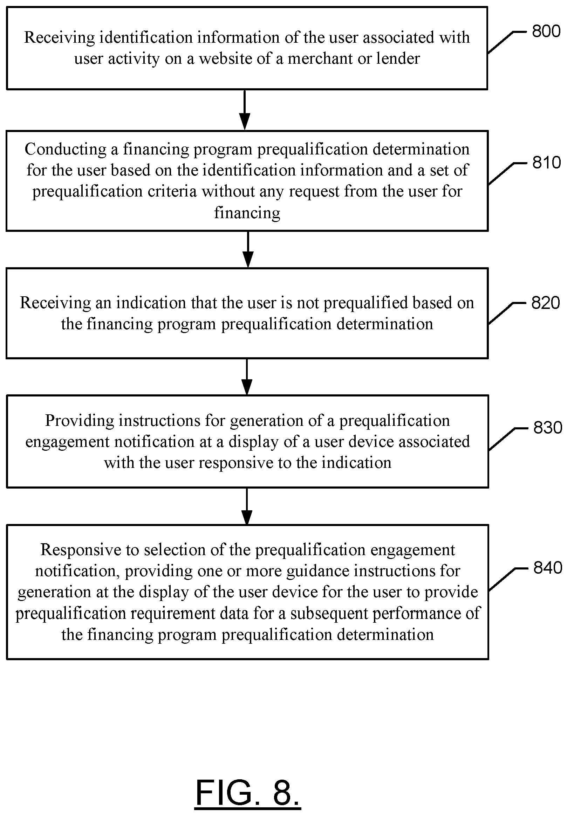

From a technical perspective, the financing platform 50 described above may be used to support some or all of the operations described above. As such, the apparatuses described in FIGS. 1-2 may be used to facilitate the implementation of several computer program and/or network communication based interactions. As an example, FIG. 8 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for providing personalized prequalification of a customer according to one embodiment of the invention is shown in FIG. 8. The method may include receiving identification information of the user associated with user activity on a website of a merchant or lender at operation 800 and conducting a financing program prequalification determination for the user based on the identification information and a set of prequalification criteria without any request from the user for financing at operation 810. The method may further include receiving an indication that the user is not prequalified based on the financing program prequalification determination at operation 820 and providing instructions for generation of a prequalification engagement notification at a display of a user device associated with the user responsive to the indication at operation 830. The method may also include, responsive to selection of the prequalification engagement notification, providing one or more guidance instructions for generation at the display of the user device for the user to provide prequalification requirement data for a subsequent performance of the financing program prequalification determination at operation 840.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, receiving the identification information may include receiving login information to an account of the user associated with the website of the merchant or the lender. In an example embodiment, conducting the financing program prequalification determination may be performed only in response to a determination that the user has previously authorized the merchant or lender to perform a financing program qualification check such as a previous prequalification inquiry or request, or an earlier loan application of any kind that involved a credit check (soft or hard). In some cases, the one or more guidance instructions may each relate to a respective criterion of the set of prequalification criteria, and the one or more guidance instructions may each provide a corresponding data entry field for the user to provide the respective criterion. In an example embodiment, at least one of the one or more guidance instructions may provide a link to enable the user to pay off a loan or make a loan payment for a prior loan associated with an account of the user associated with the website of the merchant or the lender. In some cases, providing the instructions for generation of the prequalification engagement notification may further include determining one or more reasons the user was not prequalified, and determining whether the one or more reasons are curable by engagement with the user prior to providing the instructions for generation of the prequalification engagement notification. In an example embodiment, the one or more guidance instructions may cause a display of control consoles or data entry fields associated with curing the one or more reasons at the user's device (e.g., client 20). In some cases, the method may further include, responsive to the user passing the subsequent performance of the financing program prequalification determination, informing the user of a time bounded prequalification status (with a corresponding prequalified amount). In an example embodiment, the time bounded prequalification status may be a universal status defining a prequalification amount valid with any merchant or via any payment method. However, as an alternative, the time bound prequalification status could instead be a merchant-specific status defining a prequalification amount valid with a specifically identified merchant or payment method (such as via a value card (e.g., credit or debit card) or via an online or in store purchase.

In an example embodiment, an apparatus for performing the method of FIG. 8 above may comprise a processor (e.g., the processor 102) or processing circuitry configured to perform some or each of the operations (800-840) described above. The processor may, for example, be configured to perform the operations (800-840) by performing hardware implemented logical functions, executing stored instructions, or executing algorithms for performing each of the operations. In some embodiments, the processor or processing circuitry may be further configured for additional operations or optional modifications to operations 800 to 840.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for providing personalized prequalification of a customer, the method comprising:
receiving identification information of the user associated with user activity on a website of a merchant or lender;
conducting a financing program prequalification determination for the user based on the identification information and a set of prequalification criteria without any request from the user for financing;
receiving an indication that the user is not prequalified based on the financing program prequalification determination;
providing instructions for generation of a prequalification engagement notification at a display of a user device associated with the user responsive to the indication; and
responsive to selection of the prequalification engagement notification, providing one or more guidance instructions for generation at the display of the user device for the user to provide prequalification requirement data for a subsequent performance of the financing program prequalification determination.

2. The method of claim 1, wherein receiving the identification information comprises receiving login information to an account of the user associated with the website of the merchant or the lender.

3. The method of claim 2, wherein conducting the financing program prequalification determination is only performed in response to a determination that the user has previously authorized the merchant or lender to perform a financing program qualification check.

4. The method of claim 1, wherein the one or more guidance instructions each relate to a respective criterion of the set of prequalification criteria, and
wherein the one or more guidance instructions each provide a corresponding data entry field for the user to provide the respective criterion.

5. The method of claim 4, wherein at least one of the one or more guidance instructions provides a link to enable the user to pay off a loan or make a loan payment for a prior loan associated with an account of the user associated with the website of the merchant or the lender.

6. The method of claim 1, wherein providing the instructions for generation of the prequalification engagement notification further comprises determining one or more reasons the user was not prequalified, and determining whether the one or more reasons are curable by engagement with the user prior to providing the instructions for generation of the prequalification engagement notification.

7. The method of claim 6, wherein the one or more guidance instructions display control consoles or data entry fields associated with curing the one or more reasons.

8. The method of claim 1, further comprising, responsive to the user passing the subsequent performance of the financing program prequalification determination, informing the user of a time bounded prequalification status.

9. The method of claim 8, wherein the time bounded prequalification status is a universal status defining a prequalification amount valid with any merchant.

10. The method of claim 8, wherein the time bound prequalification status is a merchant-specific status defining a prequalification amount valid with a specifically identified merchant or payment method.

11. An apparatus for providing personalized prequalification of a customer, the apparatus comprising processing circuitry configured to perform the method of any of claims 1-10.
